# EUROPÄISCHE PATENTSCHRIFT

(11) **EP 1 245 889 B1**
(45) Veröffentlichungstag und Bekanntmachung des Hinweises auf die Patenterteilung: **18.08.2004**
(21) Anmeldenummer: 02001722.4
(22) Anmeldetag: 25.01.2002
(51) Int. Cl.: F16L 21/06

(54) **Rohrschelle**
Pipe clamp
Collier de serrage

(30) Priorität: 17.03.2001 DE 10113086; 17.05.2001 DE 10123925
(43) Veröffentlichungstag der Anmeldung: 02.10.2002
(73) Patentinhaber: Rasmussen GmbH, 63477 Maintal (DE)
(72) Erfinder: Barbett, Wolfgang, 46414 Rhede (DE); Heise, Rainer, 37308 Siemerode (DE); Krämer, Markus, 63533 Mainhausen (DE); Krüger, Manfred, 63654 Büdingen (DE); Wachter, Gerhard, 63654 Büdingen (DE)
(74) Vertreter: Knoblauch, Andreas, Dr.-Ing.

(56) Entgegenhaltungen:
- EP-A- 0 205 896
- DE-A- 19 901 663
- US-A- 3 116 078
- US-A- 5 769 467

## Beschreibung

Die Erfindung bezieht sich auf eine Rohrschelle mit einem spannbaren Schellenmantel aus Metall und mit an dessen Innenseite befestigten, mit nach innen ragenden Zähnen versehenen Metallstreifen, wobei die Metallstreifen und der Schellenmantel durch Bügel verbunden sind.

Eine derartige Rohrschelle dient entweder zum koaxialen Verbinden der Enden glatter Endabschnitte von Rohren und/oder als Halterungsschelle mit einem zusätzlichen Stütz- oder Befestigungsteil zum Befestigen an Gebäudeteilen.

Rohrschellen dieser Art sind beispielsweise aus den deutschen Patentschriften 36 32 172, 37 10 852 oder 37 37 669 bekannt. Dort werden die Bügel oder die mit Zähnen oder Klauen versehenen Metallstreifen mittels Punktschweißungen, Schrauben, Nieten oder Schweiß-Näpfen am Schellenmantel befestigt. Unmittelbare Schweißverbindungen, wie Punktschweißungen, haben den Nachteil, daß sie nur zwischen speziellen Metallen möglich sind, so daß man nicht frei in der Wahl der Metalle für den Schellenmantel und den Metallstreifen mit den Zähnen oder Krallen ist. Eine Verbindung durch Schrauben oder Nieten ist aufwendig, da sie spezielle Montage und Fertigungswerkzeuge erfordert. Bei Schraubverbindungen müssen die zu verbindenden Teile mit Löchern und die Löcher des einen Teils mit Gewinde versehen werden. Die Ausbildung eines Gewindes in dünnen Blechen ist schwierig. Bei der Montage müssen die Löcher der Teile und die Schrauben miteinander fluchtend angeordnet werden. Das Vernieten erfordert nicht nur die Ausbildung von Löchern in beiden zu verbindenden Teilen, sondern ebenfalls eine Anordnung der zu verbindenden Teile in der Weise, daß ihre Löcher und die Nieten miteinander fluchten, bevor die Nieten eingeführt werden. Das Verbinden mittels Schweiß-Näpfen gemäß den deutschen Patentschriften 37 10 852 und 37 37 669 ist ebenfalls aufwendig, da die Näpfe spezielle Formteile darstellen und zum Verschweißen an vorbestimmten Stellen angeordnet werden müssen.

Der Erfindung liegt die Aufgabe zugrunde, eine Rohrschelle der eingangs genannten Art anzugeben, bei der die Verbindung von Schellenmantel und Metallstreifen einfacher ausführbar ist und eine freiere Wahl der Materialien der zu verbindenden Teile zuläßt.

Erfindungsgemäß ist diese Aufgabe dadurch gelöst, daß die Bügel einstückig mit dem Schellenmantel und formschlüssig mit jeweils einem der Metallstreifen oder einstückig mit jeweils einem der Metallstreifen und formschlüssig mit dem Schellenmantel oder formschlüssig mit jeweils einem der Metallstreifen und mit dem Schellenmantel verbunden sind.

Bei dieser Lösung kommt man ohne eine Schweißverbindung aus. Die Ausbildung der Bügel ist einfach und erfordert keine Spezialwerkzeuge. Sie können in der gleichen Stanz- und Biegewerkzeugmaschine wie der Schellenmantel und die Metallstreifen hergestellt werden. Auch ihre formschlüssige Verbindung mit dem Schellenmantel und/oder den Metallstreifen kann in der gleichen Biegemaschine erfolgen. Der Begriff "Bügel" umfaßt dabei jede Ausformung, die in der Lage ist, ein anderes Teil zumindest teilweise zu übergreifen und dadurch eine formschlüssige Verbindung mit diesem Teil zu bewirken.

So ist es auf einfache Weise möglich, daß die Bügel in Form von Laschen teilweise aus dem Schellenmantel ausgestanzt und nach innen um den jeweiligen Metallstreifen herumgebogen sind.

Alternativ kann dafür gesorgt sein, daß die Bügel in Form von Laschen aus den Metallstreifen oder einstückig mit den Metallstreifen aus einem Blech ausgestanzt und jeweils um den Rand wenigstens eines Loches im Schellenmantel herumgebogen sind.

Eine weitere Alternative besteht darin, daß die Bügel separat ausgebildet und jeweils an Rändern eines der Metallstreifen und Rändern benachbarter Löcher im Schellenmantel abgebogen sind, so daß sie an der Innenseite der Metallstreifen und der Außenseite des Schellenmantels anliegen.

In einer bevorzugten Ausgestaltung ist vorgesehen, daß mindestens ein Bügel an beiden Enden einstückig mit dem Schellenmantel oder dem Metallstreifen verbunden ist und eine Tasche bildet. Bei dieser Ausgestaltung wird die Haltekraft des Bügels an dem Teil, mit dem er einstückig verbunden ist, vergrößert. Der Bügel bildet dann eine tunnelförmige oder U-förmige Ausformung, in die ein Streifenabschnitt des Teils eingeschoben werden kann, mit dem der Bügel die formschlüssige Verbindung bewirken soll. Ein derartiger, zweiseitig befestigter Bügel bietet einen höheren Widerstand gegen Aufbiegen. Man kann dabei in Kauf nehmen, daß die Wandstärke des Bügels etwas geringer wird. Bei der Herstellung eines derartigen Bügels sind lediglich zwei Schlitze in Umfangsrichtung vor und hinter dem Bügel einzubringen. Danach kann der Bügel aus dem Schellenmantel bzw. aus dem Metallstreifen herausgedrückt werden.

In einer alternativen Ausgestaltung kann vorgesehen sein, daß der Bügel an drei Seiten einstückig mit dem Schellenmantel oder dem Metallstreifen verbunden ist und eine einseitig offene Tasche bildet. Bei der Herstellung eines derartigen Bügels ist nur ein einziger Schlitz erforderlich. Sobald der Schlitz eingebracht ist, kann der Bügel aus dem Schellenmantel bzw. dem Metallstreifen herausgebogen werden. In die einseitig offene Tasche kann dann ein Streifen des entsprechend anderen Teiles (Metallstreifen oder Schellenmantel) eingeschoben werden.

Hierbei ist bevorzugt, daß bei einem Metallstreifen nur ein Bügel eine Tasche bildet und der andere Bügel einseitig biegbar ist. Dies erleichtert die Herstellung. An einem Ende des Metallstreifens wird die Verbindung zwischen dem Schellenmantel und dem Metallstreifen dadurch bewirkt, daß ein Teil des Metallstreifens in die Tasche eingesteckt wird. Die Verbindung zwischen dem Metallstreifen und dem Schellenmantel am anderen Ende des Metallstreifens wird dann dadurch bewirkt, daß der Bügel entsprechend umgebogen wird. Man beschränkt dabei die Verformung auf den einen Bügel. Eine Verformung des Schellenbandes oder des Metallstreifens ist nicht erforderlich.

Auch ist bevorzugt, daß das Metallband entlang einer Kante eine Zahnreihe aufweist und im Bereich der anderen Kante gegenüber dem Schellenmantel abgestützt ist. Dabei steht das Metallband relativ zum Schellenmantel etwas schräg und weist axial nach innen. Das Metallband kann mit weniger Material gefertigt werden. Das Metallband wird gegen eine radiale Belastung abgestützt.

Hierbei ist bevorzugt, daß das Metallband über Stege abgestützt ist, die aus dem Schellenmantel und/oder dem Metallband herausgebogen sind. Es sind also keine zusätzlichen Bauteile erforderlich, um die Abstützung zu bewirken. Das Metallband muß nicht entlang seiner gesamten Länge abgestützt sein. Einige wenige Abstützungspunkte reichen aus. Diese Abstützungspunkte lassen sich problemlos durch die herausgebogenen Stege realisieren.

Die Erfindung und ihre Ausgestaltungen werden nachstehend anhand der beigefügten Zeichnung eines bevorzugten Ausführungsbeispiels näher beschrieben. Darin zeigen:
- Fig. 1: eine perspektivische Ansicht des Ausführungsbeispiels der erfindungsgemäßen Rohrschelle,
- Fig. 2: eine Seitenansicht der Rohrschelle nach Fig. 1,
- Fig. 3: den Schnitt III-III der Fig. 2,
- Fig. 4: den Ausschnitt A der Fig. 3 in vergrößertem Maßstab,
- Fig. 5: eine Darstellung einer alternativen Ausgestaltung entsprechend Fig. 4,
- Fig. 6: eine dritte Ausführungsform eines Bügels vom Inneren des Schellenmantels aus gesehen,
- Fig. 7: die Ausführung des Bügels vom Äußeren des Schellenmantels aus gesehen,
- Fig. 8: eine alternative Ausgestaltung einer Rohrschelle,
- Fig. 9: eine Befestigung an einem Ende eines Metallbandes,
- Fig. 10: die Befestigung am anderen Ende des Metallbandes und
- Fig. 11: eine vergrößerte Darstellung der Abstützung.

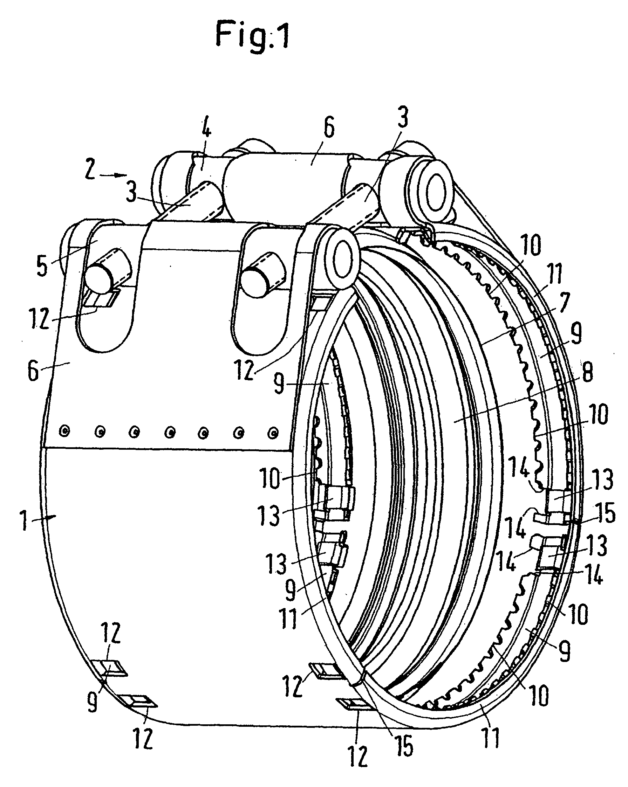

Die in der Zeichnung (Fig. 1 bis 7) dargestellte Rohrschelle ist eine Rohrkupplung zum Verbinden glatter (unprofilierter) Endabschnitte zweier Rohre. Sie besteht aus einem spannbaren Schellenmantel 1 mit einem Schraubverschluß 2 mit zwei Spannschrauben 3, die durch. Gelenkhülsen 4 und 5 oder Gelenkbolzen hindurchgeführt und mit der Gelenkhülse 5 verschraubt sind. Die Gelenkhülsen 4 und 5 sind in zu Schlaufen 6 umgebogenen und mit dem Schellenmantel 1 durch thermisches Fügen verbundenen Endabschnitten des Schellenmantels 1 drehbar gelagert. Ferner enthält die Rohrschelle auf ihrer Innenseite ein kreisförmig gebogenes Schellenband 7, dessen Enden einander überlappen. Innerhalb des Schellenbands 7 ist eine Dichtungsmuffe 8 aus gummielastischem Material angeordnet. An der Innenseite des Schellenmantels 1 sind sich in Umfangsrichtung des Schellenmantels erstreckende Metallstreifen 9 befestigt. Im dargestellten Ausführungsbeispiel sind es jeweils drei Metallstreifen 9 an jedem Ende des Schellenmantels 1. Die Metallstreifen 9 haben radial nach innen umgebogene und divergierende Randabschnitte, die an ihren radial inneren Rändern scharfkantige Zähne 10 aufweisen. Der Schellenmantel 1 hat ebenfalls radial nach innen umgebogene Randabschnitte 11, an denen die Zähne 10 der axial äußeren Randabschnitte der Metallstreifen 9 anliegen.

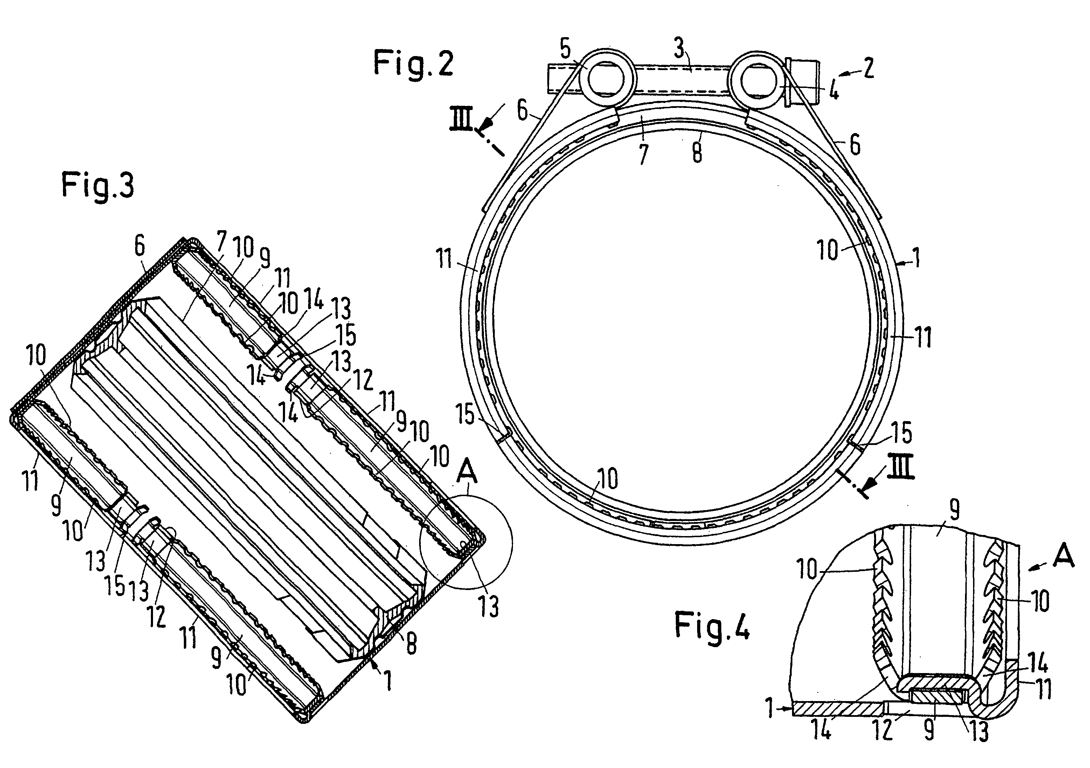

Die Art der Befestigung der Metallstreifen 9 an der Innenseite des Schellenmantels 1 ist an dem in Fig. 4 dargestellten vergrößerten Ausschnitt A der Fig. 3 deutlicher zu erkennen: Aus U-förmigen Einschnitten 12 des Schellenmantels 1 sind Bügel 13 in Form von Laschen oder Zungen radial nach innen um die Ränder der Metallstreifen 9 in radialen Ausschnitten 14 der radial nach innen umgebogenen Randabschnitte der Metallstreifen 9 herumgebogen.

Die Randabschnitte 11 sind mit radialen Schlitzen 15 versehen, in deren Nähe die Metallstreifen 9 enden. Dadurch bleibt die Rohrschelle biegsam, um sie mittels des Schraubverschlusses 2 aufweiten oder zusammenziehen zu können.

Statt die Bügel 13 in Form von Laschen oder Zungen teilweise aus dem Schellenmantel 1 auszustanzen und nach innen um den jeweiligen Metallstreifen 9 herumzubiegen, wie dargestellt, so daß sie einstückig mit dem Schellenmantel 1 und formschlüssig mit jeweils einem der Metallstreifen 9 verbunden sind, ist es auch möglich, daß die Bügel in Form von Laschen aus den Metallstreifen 9 oder einstückig zusammen mit den Metallstreifen 9 aus einem Blech ausgestanzt und jeweils um den Rand wenigstens eines Loches im Schellenmantel 1 herumgebogen sind, so daß sie einstückig mit jeweils einem der Metallstreifen 9 und formschlüssig mit dem Schellenmantel 1 verbunden sind. Eine weitere Alternative besteht darin, daß die Bügel separat ausgebildet und jeweils an Rändern eines der Metallstreifen 9 und an Rändern benachbarter Löcher im Schellenmantel 1 abgebogen sind, so daß sie an der Innenseite der Metallstreifen 9 und der Außenseite des Schellenmantels 1 anliegen, d.h. daß sie formschlüssig mit jeweils einem der Metallstreifen 9 und mit dem Schellenmantel 1 verbunden sind.

In allen Fällen ergibt sich eine einfache formschlüssige Art der Verbindung der Metallstreifen 9 mit dem Schellenmantel 1, ohne zu schweißen. Besonders einfach ist die dargestellte Art der Verbindung, wie sie insbesondere in Fig. 4 veranschaulicht ist, bei der man ohne separate Verbindungsteile auskommt. Das gleiche gilt für die kinematisch umgekehrte Ausbildung, bei der die Metallstreifen 9 mit solchen laschenartigen Bügeln in der Mitte oder an ihrem Rande ausgebildet ist, wobei diese Laschen durch benachbarte Löcher in dem Schellenmantel 1 hindurchgeführt und auf die Außenseite des Steges zwischen den Löchern umgebogen sind.

Auch die erwähnte Art der Verbindung, bei der die Bügel separat ausgebildet und jeweils an Rändern eines der Metallstreifen und an Rändern benachbarter Löcher im Schellenmantel abgebogen sind, so daß sie an der Innenseite der Metallstreifen 9 und der Außenseite des Schellenmantels 1 anliegen, ist einfach, da die Bügel aus dem gleichen Blech wie die Metallstreifen 9 oder der Schellenmantel 1 ausgestanzt und mittels der gleichen Biegemaschine wie der Schellenmantel und die Streifen in die endgültige Form gebogen werden können.

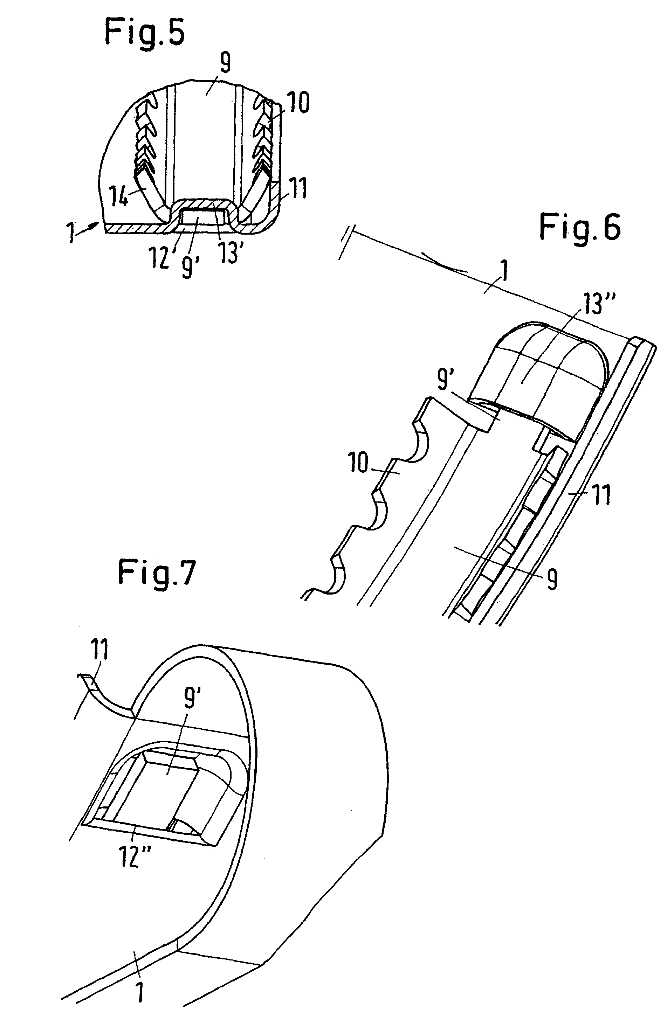

Fig. 5 zeigt eine Alternative zur Ausführungsform eines Bügels nach Fig. 4. Gleiche Teile sind mit den gleichen Bezugszeichen und entsprechende Teile mit gestrichenen Bezugszeichen versehen.

Geändert hat sich gegenüber der Ausgestaltung nach Fig. 4, daß der Bügel 13' nicht mehr durch einen U-förmigen Einschnitt 12 gebildet ist, sondern es werden (bezogen auf die Umfangsrichtung des Schellenmantels 1) zwei Einschnitte vor und hinter dem Bügel 13' eingebracht und der Bügel 13' wird dann aus dem Schellenmantel herausgebogen. Dabei entsteht ein tunnelartiger Abschnitt nach Art eines umgedrehten U, in den ein Abschnitt 9' des Metallstreifens eingeschoben werden kann. Da sich dieser Abschnitt 9' hinter dem Bügel 13' nicht wieder verbreitern kann, ist er in Fig. 5 nicht mehr schraffiert dargestellt. Natürlich ist es möglich, daß der Abschnitt 9' in Umfangsrichtung des Schellenmantels 1 länger als der Bügel 13' ist. In diesem Fall könnte er hinter dem Bügel 13' auch noch radial nach innen gebogen werden, bezogen auf den Schellenmantel 1, um die Befestigungssicherheit zu erhöhen. In der Regel ist dies aber nicht erforderlich, weil der Metallstreifen 9 am anderen Ende ebenfalls gehalten ist, was eine Bewegung des Metallstreifens 9 in Umfangsrichtung im Grunde ausschließt.

Die Fig. 6 und 7 zeigen eine dritte Alternative zur Ausbildung des Bügels, bei dem gleiche Teile mit gleichen Bezugszeichen und entsprechende Teile mit doppelt gestrichenen Bezugszeichen versehen sind. Hierbei zeigt Fig. 6 eine Ansicht auf den Schellenmantel 7 von innen, während Fig. 7 die Ansicht auf den Schellenmantel 7 von außen zeigt.

Es ist zu erkennen, daß der Bügel 13" an drei Seiten mit dem Schellenmantel 1 verbunden ist. Er wird dadurch gebildet, daß in Umfangsrichtung des Schellenmantels 1 an einem Ende ein Einschnitt 12" eingebracht wird. Danach kann der Bügel 13" aus dem Schellenband herausgedrückt werden. Er bildet dann eine einseitig offene Tasche, in die der Abschnitt 9' des Metallbandes 9 eingeschoben werden kann, wie dies insbesondere aus Fig. 7 ersichtlich ist.

Es ist zweckmäßig, wenn die in Fig. 5 bzw. 6 und 7 dargestellte Befestigung nur an einem Ende des Metallbandes 9 erfolgt, während die Befestigung des Metallbandes 9 am Schellenmantel 1 am anderen Ende so erfolgt, wie dies in Fig. 4 dargestellt ist. Dies erleichtert die Herstellung. Man kann nach dem Herstellen der Bügel 13, 13' bzw. 13" den erstgenannten Bügel 13 aufbiegen, das Metallband mit seinem Ende 9' in die Taschen einschieben, die durch die Bügel 13' bzw. 13" gebildet sind, und dann am anderen Ende den Bügel 13 zurückbiegen, um das Metallband 9 am Schellenmantel 1 zu fixieren.

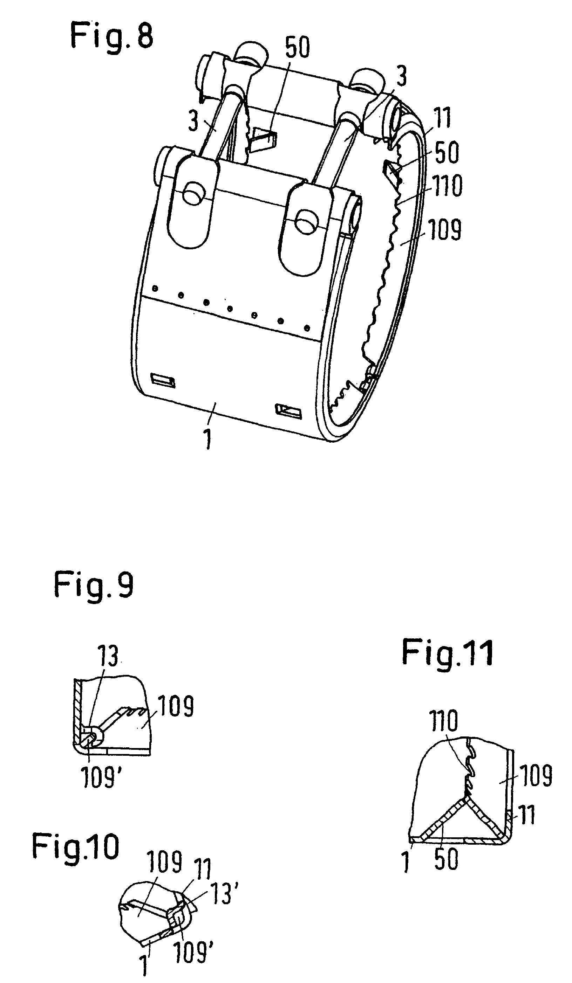

Die Fig. 8 bis 11 zeigen eine alternative Ausgestaltung einer Rohrschelle, bei der gleiche Teile wie in Fig. 1 bis 7 mit gleichen Bezugszeichen versehen sind. Einander entsprechende Teile sind mit gegenüber der Darstellung der Fig. 1 mit um 100 erhöhten Bezugszeichen versehen.

Im Gegensatz zu der Ausgestaltung nach Fig. 1 weist das Metallband 109 nur. eine einzige Zahnreihe 110 auf. Im übrigen ist das Metallband in den Winkel zwischen dem Schellenmantel 1 und dem Randabschnitt 11 abgestützt, was beispielsweise aus Fig. 11 zu erkennen ist. Dabei ist das Metallband 109 gegenüber der Axialerstreckung des Schellenmantels 1 um einen Winkel von etwa 45° nach innen geneigt. Das Metallband 109 wird hierbei durch Stege 50 abgestützt, die aus dem Schellenmantel 1 herausgebogen sind.

An den Enden ist das Metallband 109 in gleicher Weise gehalten wie das Metallband 9 bei der Ausgestaltung nach den Fig. 4 und 5. Wie aus Fig. 9 zu erkennen ist, ist das Metallband 109 durch einen Bügel 13 gehalten, der um das Ende 109' des Metallbandes 109 herumgebogen ist. Das andere Ende des Metallbandes 109 ist in Fig. 10 dargestellt. Dort ist ein Bügel 13' vorgesehen, d. h. dieser Bügel ist an beiden Enden am Schellenband 1 festgehalten, wobei sich ein Ende durchaus an den Randabschnitten 11 befinden kann. In Fig. 10 ist darüber hinaus dargestellt, daß der Endabschnitt 109' des Metallbandes 109 gegenüber dem Korpus des Metallbandes 109 verdreht ist, so daß der Bügel 13' eine kürzere Länge überdecken muß als der Bügel 13 nach Fig. 9.

Die erfindungsgemäße Art der Verbindung ist nicht nur bei der dargestellten Rohrschelle, sondern auch bei anderen Arten von Rohrschellen anwendbar, z.B. bei Halterungsrohrschellen oder Axialzugentlastungs-Rohrschellen, die auf der Innenseite ebenfalls mit verzahnten Metallstreifen versehen sind.

## Patentansprüche

1. Rohrschelle mit einem spannbaren Schellenmantel (1) aus Metall und mit an dessen Innenseite befestigten, mit nach innen ragenden Zähnen (10) versehenen Metallstreifen (9), wobei die Metallstreifen (9) und der Schellenmantel (1) durch Bügel (13, 13', 13") verbunden sind, **dadurch gekennzeichnet, daß** die Bügel (13, 13', 13") einstückig mit dem Schellenmantel (1) und formschlüssig mit jeweils einem der Metallstreifen (9) oder einstückig mit jeweils einem der Metallstreifen (9) und formschlüssig mit dem Schellenmantel (1) oder formschlüssig mit jeweils einem der Metallstreifen (9) und mit dem Schellenmantel (1) verbunden sind.

2. Rohrschelle nach Anspruch 1, **dadurch gekennzeichnet, daß** die Bügel (13) in Form von Laschen teilweise aus dem Schellenmantel (1) ausgestanzt und nach innen um den jeweiligen Metallstreifen (9) herumgebogen sind.

3. Rohrschelle nach Anspruch 1, **dadurch gekennzeichnet, daß** die Bügel (13) in Form von Laschen aus den Metallstreifen (9) oder einstückig mit den Metallstreifen (9) aus einem Blech ausgestanzt und jeweils um den Rand wenigstens eines Loches im Schellenmantel (1) herumgebogen sind.

4. Rohrschelle nach Anspruch 1, **dadurch gekennzeichnet, daß** die Bügel (13) separat ausgebildet und jeweils an Rändern eines der Metallstreifen (9) und Rändern benachbarter Löcher im Schellenmantel (1) abgebogen sind, so daß sie an der Innenseite der Metallstreifen (9) und der Außenseite des Schellenmantels (1) anliegen.

5. Rohrschelle nach Anspruch 1, **dadurch gekennzeichnet, daß** mindestens ein Bügel (13', 13") an beiden Enden einstückig mit dem Schellenmantel (1) oder dem Metallstreifen verbunden ist und eine Tasche bildet.

6. Rohrschelle nach Anspruch 5, **dadurch gekennzeichnet, daß** der Bügel (13") an drei Seiten einstückig mit dem Schellenmantel (1) oder dem Metallstreifen verbunden ist und eine einseitig offene Tasche bildet.

7. Rohrschelle nach Anspruch 5 oder 6, **dadurch gekennzeichnet, daß** bei einem Metallstreifen (9) nur ein Bügel (13', 13") eine Tasche bildet und der andere Bügel (13) einseitig biegbar ist.

8. Rohrschelle nach einem der Ansprüche 1 bis 7, **dadurch gekennzeichnet, daß** der Metallstreifen (109) entlang einer Kante eine Zahnreihe (110) aufweist und im Bereich der anderen Kante gegenüber dem Schellenmantel (1) abgestützt ist.

9. Rohrschelle nach Anspruch 8, **dadurch gekennzeichnet, daß** der Metallstreifen (109) über Stege (50) abgestützt ist, die aus dem Schellenmantel (1) und/oder dem Metallstreifen (109) herausgebogen sind.

## Claims

1. A pipe clip comprising a tightenable clip casing (1) of metal and metal strips (9) which are fixed to the inside of the clip casing and which are provided with inwardly projecting teeth (10), wherein the metal strips (9) and the clip casing (1) are connected by loops (13, 13', 13"), **characterised in that** the loops (13, 13', 13") are connected integrally to the clip casing (1) and in positively locking relationship to a respective one of the metal strips (9) or are connected integrally to a respective one of the metal strips (9) and in positively locking relationship to the clip casing (1) or are connected in positively locking relationship to a respective one of the metal strips (9) and to the clip casing (1).

2. A pipe clip according to claim 1 **characterised in that** the loops (13) are stamped in the form of bars partially out of the clip casing (1) and are bent over inwardly around the respective metal strip (9).

3. A pipe clip according to claim 1 **characterised in that** the loops (13) are stamped in the form of bars out of the metal strips (9) or integrally with the metal strips (9) out of a metal sheet and are respectively bent around the edge of at least one hole in the clip casing (1).

4. A pipe clip according to claim 1 **characterised in that** the loops (13) are provided separately and are respectively bent away at edges of one of the metal strips (9) and edges of adjacent holes in the clip casing (1) so that they bear against the inside of the metal strips (9) and the outside of the clip casing (1).

5. A pipe clip according to claim 1 **characterised in that** at least one loop (13', 13") is connected at both ends integrally to the clip casing (1) or the metal strip and forms a pocket.

6. A pipe clip according to claim 5 **characterised in that** the loop (13") is connected integrally to the clip casing (1) or the metal strip and forms a pocket which is open at one side.

7. A pipe clip according to claim 5 or claim 6 **characterised in that** in the case of a metal strip (9) only one loop (13', 13") forms a pocket and the other loop (13) is bendable at one side.

8. A pipe clip according to one of claims 1 to 7 **characterised in that** the metal strip (109) has a row of teeth (110) along one edge and is supported in the region of the other edge with respect to the clip casing (1).

9. A pipe clip according to claim 8 **characterised in that** the metal strip (109) is supported by way of legs (50) which are bent out of the clip casing (1) and/or the metal strip (109).

## Revendications

1. Collier de serrage comprenant une enveloppe métallique (1) pouvant être serrée, et des rubans métalliques (9) fixés à la face intérieure de ladite enveloppe et munis de dents (10) en saillie vers l'intérieur, lesdits rubans métalliques (9) et ladite enveloppe (1) du collier étant reliés par l'intermédiaire d'étriers (13, 13', 13"), **caractérisé par le fait que** lesdits étriers (13, 13', 13") sont reliés d'un seul tenant à l'enveloppe (1) du collier et, par concordance de formes, à l'un respectif des rubans métalliques (9) ; ou d'un seul tenant à l'un respectif des rubans métalliques (9) et, par concordance de formes, à l'enveloppe (1) du collier ; ou, par concordance de formes, à l'un respectif des rubans métalliques (9) et à l'enveloppe (1) du collier.

2. Collier de serrage selon la revendication 1, **caractérisé par le fait que** les étriers (13) sont partiellement poinçonnés à partir de l'enveloppe (1) dudit collier, sous la forme de pattes, puis sont cintrés vers l'intérieur autour du ruban métallique (9) considéré.

3. Collier de serrage selon la revendication 1, **caractérisé par le fait que** les étriers (13) sont poinçonnés à partir des rubans métalliques (9), sous la forme de pattes, ou d'un seul tenant avec lesdits rubans métalliques (9) à partir d'une tôle, et sont respectivement cintrés autour du bord d'au moins un trou pratiqué dans l'enveloppe (1) dudit collier.

4. Collier de serrage selon la revendication 1, **caractérisé par le fait que** les étriers (13) sont de réalisation distincte et sont respectivement rabattus sur des bords de l'un des rubans métalliques (9), et sur des bords de trous voisins pratiqués dans l'enveloppe (1) dudit collier, de sorte qu'ils sont appliqués contre la face intérieure desdits rubans métalliques (9) et contre la face extérieure de ladite enveloppe (1) du collier.

5. Collier de serrage selon la revendication 1, **caractérisé par le fait qu'**au moins un étrier (13', 13") est relié d'un seul tenant, par les deux extrémités, à l'enveloppe (1) dudit collier ou au ruban métallique, et forme une poche.

6. Collier de serrage selon la revendication 5, **caractérisé par le fait que** l'étrier (13") est relié d'un seul tenant, par trois côtés, à l'enveloppe (1) dudit collier ou au ruban métallique, et forme une poche ouverte d'un côté.

7. Collier de serrage selon la revendication 5 ou 6, **caractérisé par le fait que**, dans le cas d'un ruban métallique (9), seul un étrier (13', 13") forme une poche, et l'autre étrier (13) peut être cintré d'un côté.

8. Collier de serrage selon l'une des revendications 1 à 7, **caractérisé par le fait que** le ruban métallique (109) comporte une rangée de dents (110) le long d'une arête et est en appui, dans la région de l'autre arête, vis-à-vis de l'enveloppe (1) dudit collier.

9. Collier de serrage selon la revendication 8, **caractérisé par le fait que** le ruban métallique (109) prend appui par l'intermédiaire de membrures (50) repliées hors de l'enveloppe (1) dudit collier et/ou hors dudit ruban métallique (109).
